# EUROPEAN PATENT APPLICATION

(11) **EP 1 844 681 A1**
(43) Date of publication of application: **17.10.2007**
(21) Application number: 05738255.8
(22) Date of filing: 28.03.2005
(51) Int. Cl.: A47B 96/00, F16B 12/12

(54) **MANUAL BAMBOO TIMBRE FURNITURE WITH TENONS**

(30) Priority: 20.01.2005 CN 200510002288
(71) Applicant: Maria Yee. Inc., Santa Cruz CA 95060-2127 (US)
(72) Inventor: YEE, Maria, Scotts Valley, CA 95066-3644 (US)
(74) Representative: Riebling, Peter
(86) International application number: PCT/CN2005/000390
(87) International publication number: WO 2006/076832

(57) **Abstract**

Engineered bamboo furniture having components joined with mortise and tenon joints is made by fabricating the components of engineered bamboo, forming corresponding pairs of complementary mortise and tenon joints on the components, and assembling the parts into a finished article of furniture by bonding the respective tenons of the components in the corresponding mortises of the components with an adhesive. The engineered bamboo material is made by laminating bamboo stripes or color bamboo stripes together with an adhesive under a high pressure, the bamboo stripes are treated with high temperature steaming and drying, carbonizing, dehydrating and starch-removal processes, the color bamboo stripes are further treated by an additional high pressure dyeing process.. The engineered bamboo formed by using an adhesive under a high pressure comprises face-bonded engineered bamboo, edge-bonded engineered bamboo, I-type engineered bamboo and multi-I engineered bamboo. The mortise and tenon joints on the components may be square, trapezoidal, circular, elliptical, or arcuate trapezoids, exposed joints and secret joints, said exposed and secret joints can be lap butt joints, embracing-shoulder joints, off-set finger scarf joint, corner joint inserted shoulder joints, 3D-inserted shoulder joints, secret double shoulder lock miter joints, and so on.

## Description

### TECHNICAL FIELD

The present invention relates to furniture and in particular, to engineered bamboo furniture joined with mortise and tenon joints.

### BACKGROUND OF THE INVENTION

At present, there is a scarcity of timber resources in the world, and the immoderate cutting of trees in previous decades has resulted in an ecological imbalance in the world's forests. Trees are not only expensive to plant, but also require a relatively long time (about 15-50 years) to mature into a size useful for lumber. By contrast, China and other Asian countries have an abundance of bamboo resources. Bamboo is relatively easy and inexpensive to cultivate and takes only a relatively short time (about 5-8 years) to mature to a useful size. Using bamboo instead of conventional wood timber to manufacture furniture can thus reduce the cost of furniture, make full use of the bamboo resource, protect the environment and thereby benefit mankind.

The mortise-and-tenon method of timber joining has been used in the Chinese culture since ancient times, and thus, the application of the mortise-and-tenon connection structure to bamboo furniture serves to preserve and carry forward an aspect of Chinese culture. "Engineered bamboo" (i.e., bamboo boards and bamboo squares) is a relatively new material, and to date, has been used only to manufacture bamboo flooring and engineered bamboo panel furniture joined with conventional metal fasteners. However, there is no record of implementation of mortise-and-tenon connection structures in the manufacture of engineered bamboo furniture.

Upon searching, there is found no patent documents or non-patent documents relate to mortise-and-tenon engineered bamboo furniture connected by mortise-and-tenon, and even no patent or non-patent documents relate to engineered bamboo manufactured furniture.

### SUMMARY OF THE INVENTION

An object of the present invention is to develop a new and environmentally friendly material engineered bamboo namely bamboo boards and bamboo squares to manufacture furniture in which the parts and components of the furniture are connected with mortise and tenon joints, without the use of conventional wood products.

An engineered bamboo furniture with mortise-and-tenon joints described in the present invention is manufactured by manufacturing component parts of the furniture out of engineered bamboo viz. bamboo boards and bamboo squares; forming mortises and tenons of various types and shapes on or in the component parts, and bonding the component parts into a finished article of furniture using the mortises and tenons and an adhesive; The finished furniture may comprise a table, a chair, a cabinet, a bed, a book shelf or the like.

In the present invention, the engineered bamboo material is made by laminating bamboo stripes or color bamboo stripes together with an adhesive under a high pressure. Prior to their lamination, the bamboo strips are treated by heat-digesting, drying at a high temperature, carbonizing, dehydrating and a starch-extraction process, the color bamboo stripes are further treated by an additional high pressure dyeing process. The engineered bamboo formed by using an adhesive under a high pressure comprises face-bonded engineered bamboo, in which bamboo strips are laminated to each other by depositing an adhesive on opposite wide faces of the strips, and pressing them together until the adhesive cures. In this procedure, "green bamboo" strips and "yellow bamboo" are laminated parallel to each other.

The engineered bamboo formed by using an adhesive under a high pressure comprises edge-bonded engineered bamboo, which is formed by laminating top, middle and bottom three layers of flat-laid bamboo strips with an adhesive under a high pressure.

The edge-bonded engineered bamboo may be in the arrangement that all three layers of bamboo stripes are arranged longitudinally, and the top and the bottom layer are arranged so that the green bamboo of each layer are facing outwards, this arrangement is called edge-bonded engineered bamboo with same vein.

The edge-bonded engineered bamboo may be in the arrangement that the top and the bottom layers of bamboo stripes are arranged longitudinally with there green bamboo facing outwards and the middle layer is arranged perpendicular to the top and bottom layer, this arrangement is called edge-bonded engineered bamboo with different vein.

The engineered bamboo formed by using an adhesive under a high pressure comprises I-type engineered bamboo, which is formed by laminating flat-laid top and bottom layers, and a stand-laid middle layer sandwiched there between with an adhesive under a high pressure.

The I-type engineered bamboo may be in the arrangement that all three layers of bamboo stripes are arranged longitudinally, this arrangement is called I-type engineered bamboo with same vein.

The I-type engineered bamboo may be in the arrangement that the top and the bottom layers of bamboo stripes are arranged transversely, and the middle layer of bamboo stripe is arranged perpendicularly with respect to the top and bottom layers of bamboo stripes, this arrangement is called I-type engineered bamboo with different vein.

The engineered bamboo formed by using an adhesive under a high pressure comprises multi-I engineered bamboo, which is formed by laminating layers of I-type engineered bamboo together.

The multi-I engineered bamboo may be in the arrangement that all bamboo stripe layers are arranged longitudinally, this arrangement is called multi-I engineered bamboo with same vein.

The multi-I engineered bamboo may be in the arrangement that adjacent bamboo stripe layers are arranged perpendicularly with respect to each other, this arrangement is called multi-I engineered bamboo with different vein.

In general, the face-bonding and edge-bonding techniques are used to form thin board-like materials, the I-type technique is used to form medium thickness boards and small bamboo square, and the multi-I method is used to form thick boards and large bamboo squares.

Said tenons and complementary mortises used to join the furniture components can be square, trapezoidal□

Said tenons and complementary mortises used to join the furniture components can be circular, elliptical;

Said tenons and complementary mortises used to join the furniture components can be arcuate trapezoids.

Said tenons and complementary mortises used to join the furniture components including exposed joints and secret joints, said exposed and secret joints can be lap butt joints, embracing-shoulder joints, off-set finger scarf joint, corner joint inserted shoulder joints, 3D-inserted shoulder joints, secret double shoulder lock miter joints, and so on.

The present invention is advantageous in that:
1. The engineered bamboo material has superior physical mechanics performance and technical properties over conventional wood timber. It has a high density (>=0.79 g/cm<3> ), bending strength (90 MPa), and rigidity (60 MPa, up to 32 HB, whereas, Zelkova timber is 23 HB and Oak timber is only 24 HB). It also has excellent shock resistance (>=95 kj/m<2>), and a higher compression strength than either Zelkova or Oak timber.
2. In addition to the above advantages over conventional timber, engineered bamboo also has other outstanding performance advantages, e.g., a lower wet expansion ratio and a lower drying shrinkage (<=0.5%), which enable the design and manufacture of furniture that breaks with the ordinary limitations imposed by the deformations experienced by conventional timber as a result of wet expansion.
3. With suitable modifications, most conventional timber mortise-and-tenon connection techniques can also be used with engineered bamboo assemblies.
4. By improving on the size and fit tolerances of conventional mortise-and-tenon connection techniques, engineered bamboo enables the fabrication of furniture with high accuracy and large, attractive surfaces having a good, smooth finish.
5. Circular or ring-shaped parts or components can be formed simply by bending the bamboo board under either hot or cold pressure, rather than by cutting the lumber into segments and then reassembling them into the desired configuration, which is the method commonly utilized in manufacturing conventional timber furniture. This improvement results in a substantial saving of scrap material.
6. Due to the high density, rigidity and excellent bending and compression strength of engineered bamboo, furniture having the same mechanical properties as larger, thicker conventional wood furniture can be made from thinner but stronger engineered bamboo materials. In this way, natural resources are conserved.
7. Furniture made from bamboo evokes a clean, fresh, cool feeling during the summer-time.
8. The length, width and thickness of the engineered bamboo boards and bamboo squares can be determined by the size of the furniture to be made from it. Thus the utilization efficiency of the material can be greatly improved, so that this renewable natural resource is fully utilized.

### BRIEF DESCRIPTION OF THE DRAWINGS

FIG. 1 shows an upper front end perspective view of a face-bonded engineered bamboo and an enlarged detail view of a portion thereof.
FIG. 2a shows an upper front end perspective view of a edge-bonded engineered bamboo with same vein and an enlarged detail view of a portion thereof;
FIG. 2b shows an upper front end perspective view of a edge-bonded engineered bamboo with different vein and an enlarged detail view of a portion thereof;
FIG. 3a shows an upper front end perspective view of an I-type engineered bamboo with same vein and an enlarged detail view of a portion thereof;
FIG. 3b shows an upper front end perspective view of an I-type engineered bamboo with different vein and an enlarged detail view of a portion thereof;
FIG. 4a shows an upper front end perspective view of a multi-I engineered bamboo with same vein and an enlarged detail view of a portion thereof;
FIG. 4b shows an upper front end perspective view of a multi-I engineered bamboo with different vein and an enlarged detail view of a portion thereof;
FIG. 5a shows upper corner perspective views of a three-dimensional mortise and tenon corner joint for conventional wood furniture.
FIG. 5b shows upper corner perspective views of a three-dimensional mortise and tenon corner joint for engineered bamboo furniture;
FIG. 6a illustrates upper side perspective views of a two-dimensional mortise and tenon corner joint for conventional wood furniture;
FIG. 6b illustrates upper side perspective views of a two-dimensional mortise and tenon corner joint for engineered bamboo furniture;
FIG. 7a is an upper corner perspective view of a dovetail joint for conventional wood furniture;
FIG. 7b is an upper corner perspective view of a dovetail corner joint for engineered bamboo furniture;
FIG. 8a is an upper corner perspective view of a joint for the engineered bamboo frame and panel furniture;
FIG. 8b is an upper side perspective view of a cross-lap joint for engineered bamboo furniture□
FIG 9a is an upper corner perspective view of a dovetail corner joint for engineered bamboo furniture, showing the joint in a disassembled state;
FIG. 9b is an upper corner perspective view of a dovetail corner joint for engineered bamboo furniture, showing the joint in an assembled state;
FIG 10a is an upper side perspective views of a closed T-type mortise and tenon joint for engineered bamboo squares, showing the joint in a disassembled state;
FIG 10b is an upper side perspective views of a closed T-type mortise and tenon joint for engineered bamboo squares, showing the joint in an assembled state;
FIG. 11a is an upper corner perspective view of a rectangular furniture panel assembly, showing the panel in a disassembled state;

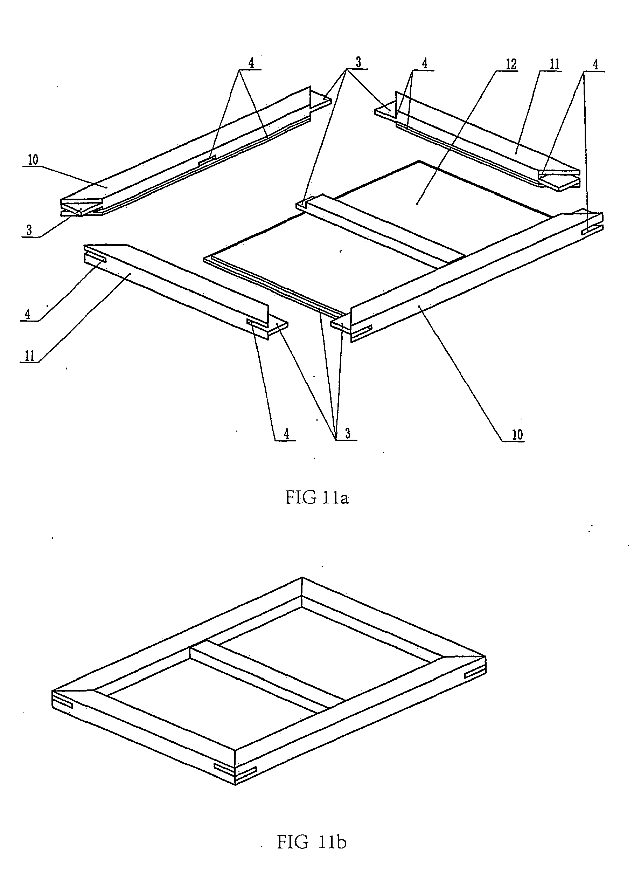

FIG. 11 b is an upper corner perspective view of a rectangular furniture panel assembly, showing the panel in an assembled state;

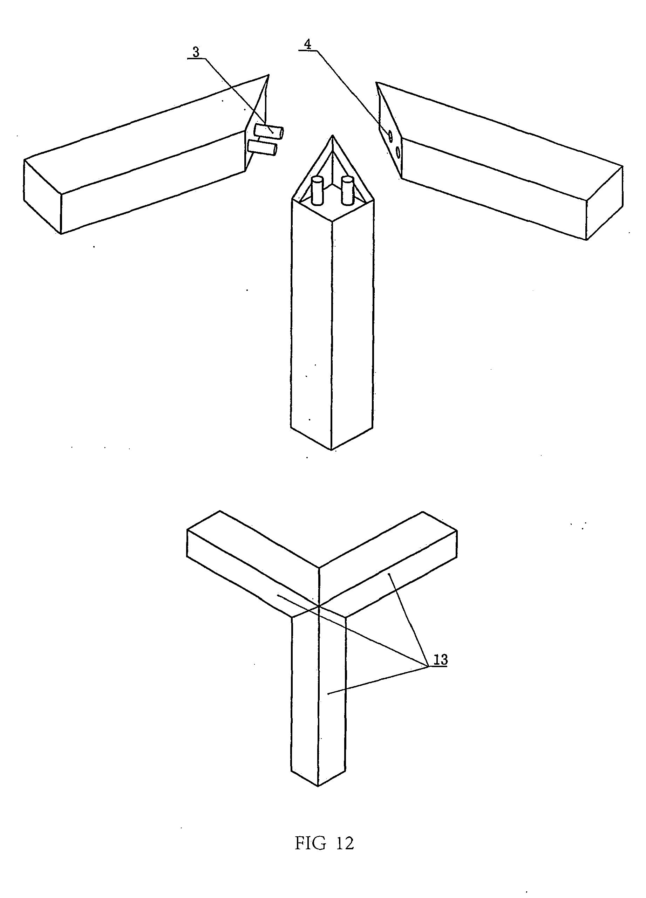

FIG 12 illustrates upper corner perspective views of a three-dimensional dowelled mortise and tenon corner joint for engineered bamboo squares;

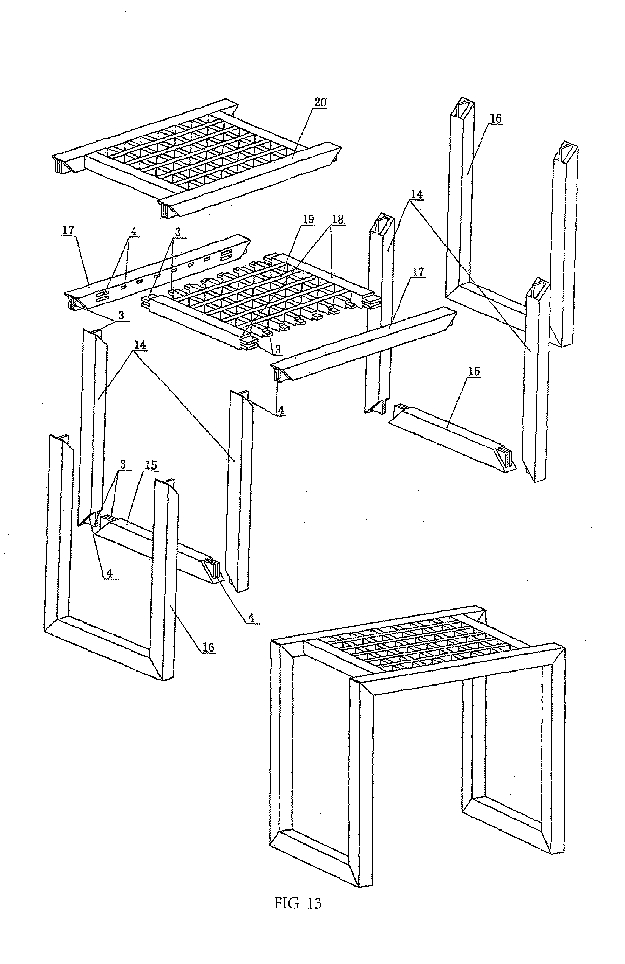

FIG. 13 is an upper side perspective view shows the assembly of a lattice-top table made of engineered bamboo;

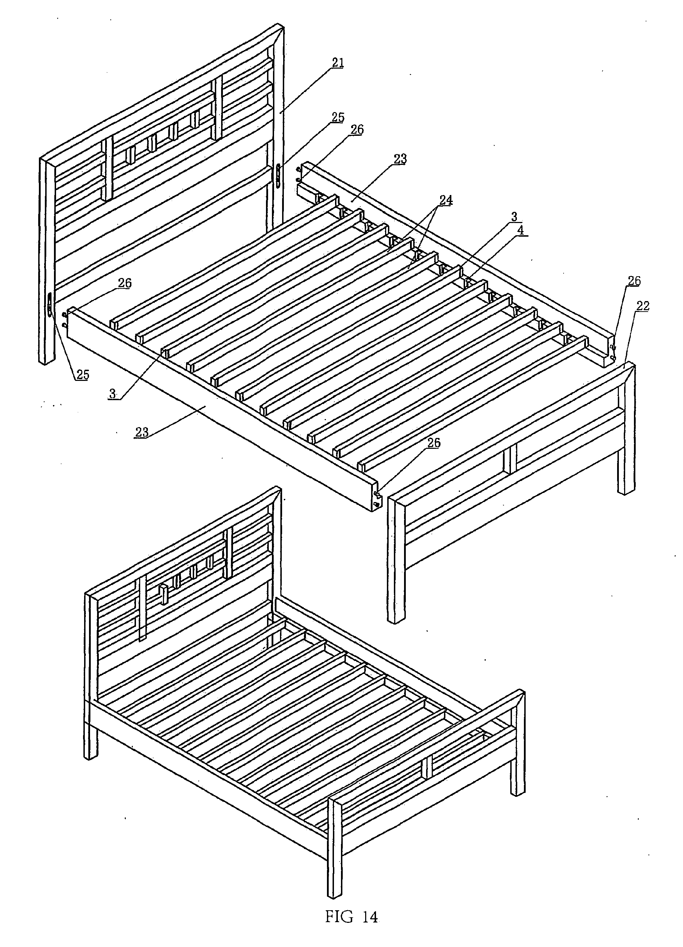

FIG. 14 is an upper left front perspective view shows the assembly of a bed frame made of engineered bamboo.

### DETAILED DESCRIPTION OF THE PREFERRED EMBODIMENTS

Preparation for implementing the methods of the present invention includes following steps:
1. Measuring the mechanical and physical properties (including compression strength, bending strength, flexural modulus, impact hardness, shear strength, rigidity, bending resistance, wear rate, nail holding power, and the like) of the engineered bamboo materials (i.e., the bamboo boards and bamboo squares) to be utilized in the furniture.
2. Determining the desired structural and material (i.e., face-bonded, edge-bonded, or combinations thereof) properties of the furniture components, based on the above mechanical and physical properties of the engineered bamboo boards or bamboo squares, and determining the dimensions of the material components necessary to achieve those properties.
3. Determining the optimum mortise-and-tenon joining techniques to be used to join the components of the furniture together, including definition of corresponding product quality standard procedures, processing equipment, cutting tool, die clamp requirements and the like.

The engineered bamboo furniture with mortise-and-tenon joints of the present invention makes use of a manmade, "engineered bamboo" material that is made of bamboo strips or color bamboo stripes that are laminated together by using an adhesive under high pressure. Prior to their lamination, the bamboo strips are treated by high temperature steaming, high temperature drying, carbonizing, dehydrating and a process that extracts the starch from them, the color bamboo stripes are further treated by an additional high pressure dyeing process.

The turquoise surface layer of a bamboo stripe is called green bamboo and the rest part of a bamboo stripe is called yellow bamboo.

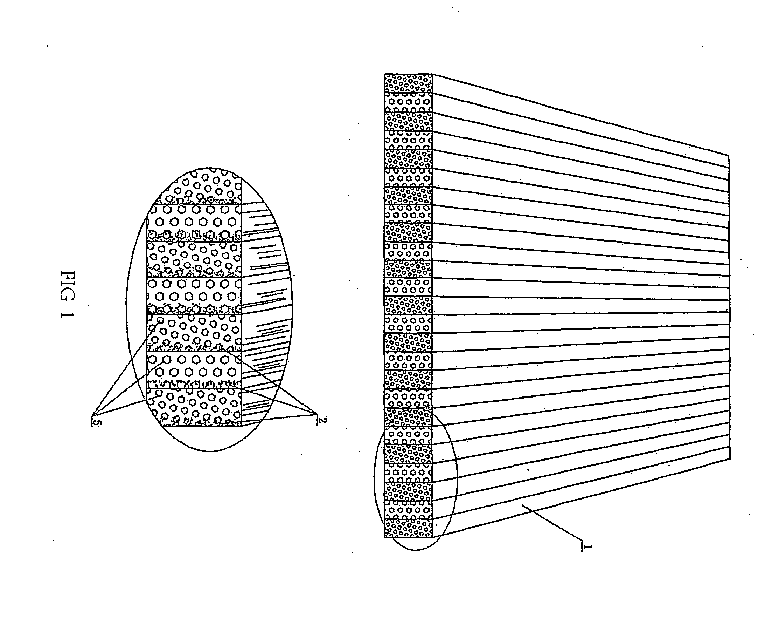

As illustrated in FIG1, the engineered bamboo formed by using an adhesive under a high pressure comprises face-bonded engineered bamboo, in which bamboo strips are laminated to each other by depositing an adhesive on opposite wide faces of the bamboo strips 1, and pressing them together until the adhesive cures. In this procedure, green bamboo 2 and yellow bamboo 5 are laminated parallel to each other.

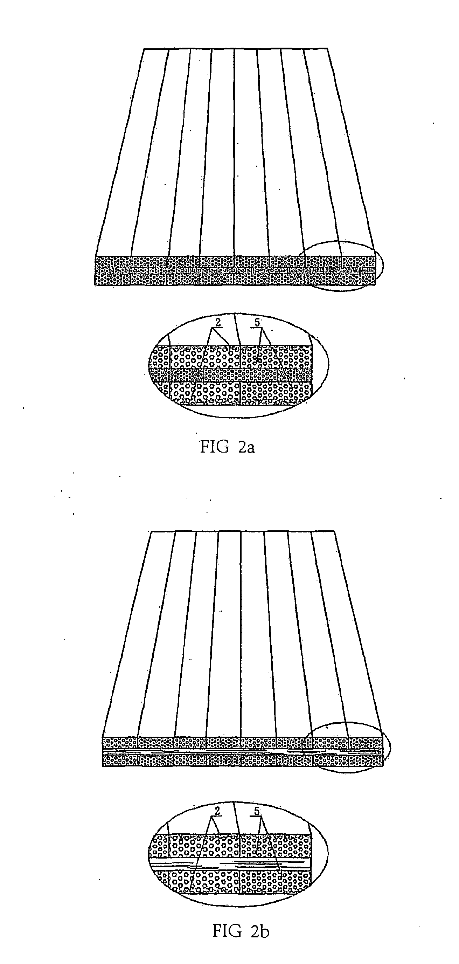

As illustrated in FIG 2a and 2b, the engineered bamboo formed by using an adhesive under a high pressure comprises edge-bonded engineered bamboo, which is formed by laminating top, middle and bottom three layers of flat-laid bamboo strips with an adhesive under a high pressure.

As it is shown in 2a, the edge-bonded engineered bamboo may be in the arrangement that all three layers of bamboo stripes are arranged longitudinally, and the top and the bottom layer are arranged so that the green bamboo of each layer are facing outwards, this arrangement is called edge-bonded engineered bamboo with same vein.

As it is shown in 2b, the edge-bonded engineered bamboo may be in the arrangement that the top and the bottom layers of bamboo stripes are arranged longitudinally with there green bamboo facing outwards and the middle layer is arranged perpendicular to the top and bottom layer, this arrangement is called edge-bonded engineered bamboo with different vein.

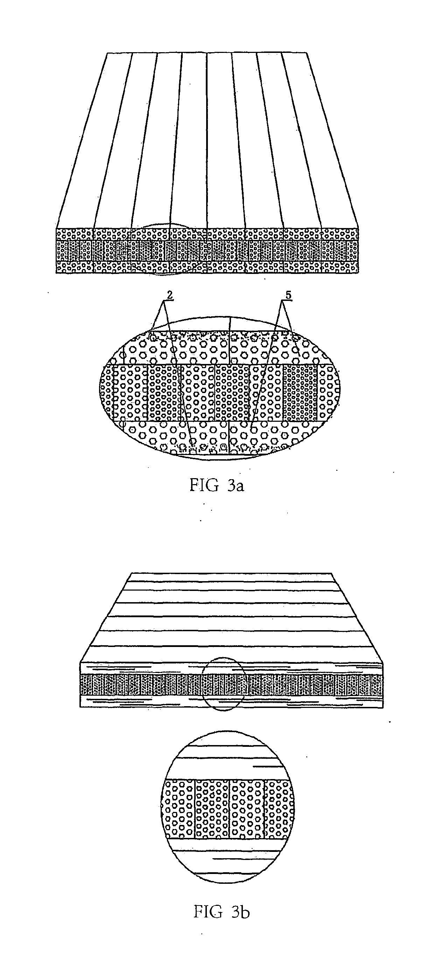

As illustrated in FIG 3a and 3b, the engineered bamboo formed by using an adhesive under a high pressure comprises I-type engineered bamboo, which is formed by laminating flat-laid top and bottom layers, and a stand -laid middle layer sandwiched there between with an adhesive under a high pressure.

As it is shown in 3a, the I-type engineered bamboo may be in the arrangement that all three layers of bamboo stripes are arranged longitudinally, this arrangement is called I-type engineered bamboo with same vein.

As it is shown in 3b, the I-type engineered bamboo may be in the arrangement that the top and the bottom layers of bamboo stripes are arranged transversely, and the middle layer of bamboo stripe is arranged perpendicularly with respect to the top and bottom layers of bamboo stripes, this arrangement is called I-type engineered bamboo with different vein.

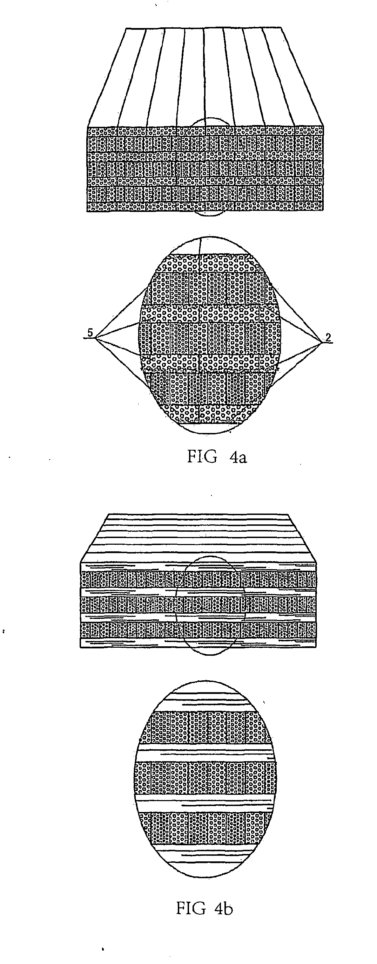

As illustrated in FIG 4a and 4b, the engineered bamboo formed by using an adhesive under a high pressure comprises multi-I engineered bamboo, which is formed by laminating I-type engineered bamboos.

Where it is shown in 4a, the multi-I engineered bamboo may be in the arrangement that all bamboo stripe layers are arranged longitudinally, this arrangement is called multi-I engineered bamboo with same vein.

Where it is shown in 4b, the multi-I engineered bamboo may be in the arrangement that adjacent bamboo stripe layers are arranged perpendicularly with respect to each other, this arrangement is called multi-I engineered bamboo with different vein.

In general, the face-bonding and edge-bonding techniques are used to form thin board-like materials, the I-type technique is used to form medium thickness boards and small bamboo squares, and the multi-I method is used to form thick boards and large bamboo squares.

When manufacturing furniture made from the engineered bamboo materials (engineered bamboo boards and bamboo squares) according to the present invention, tenons and corresponding mortises (or grooves) of different shapes are formed on or in the engineered bamboo parts; then the tenon and/or corresponding mortise are coated with an adhesive and inserting the tenon into the corresponding mortise; then the adhesive are cured; and, finally, the assembled parts are finished. The assembly of parts may involve mortise-and-tenon joints and butt joints. Wherein butt joints may include lap joints, tongue-and-groove joints, dado joints, dowelled joints and insert joints, whereas the mortise-and-tenon joints utilized may include both exposed, or through joints, secret or closed joints, lap butt joints, embracing-shoulder joints, off-set finger scarf joints, lock miter joints, inserted-shoulder miter joints, and exposed, secret (half closed or closed) dove-tailed joints, and so on.

The timber normally used for making furniture comprises a woody, fibrovascular tissue that comes from the trunks of perennial coniferous or broadleaf trees. The diameter of the trunks of such trees depends on the age of the tree. Their wood tends to be elastic, high in wet expansion ratio and drying shrinkage, and is therefore relatively easy to process. Accordingly, conventional wood structures, including furniture, can utilize mortise and tenon joints of many types. However, engineered bamboo has a relatively higher rigidity and strength, and relatively lowers wet expansion and drying shrinkage ratios. Accordingly, it is necessary to modify most conventional timber mortise and tenon joints and to implement new mortise-and-tenon joint designs for use with engineered bamboo materials.

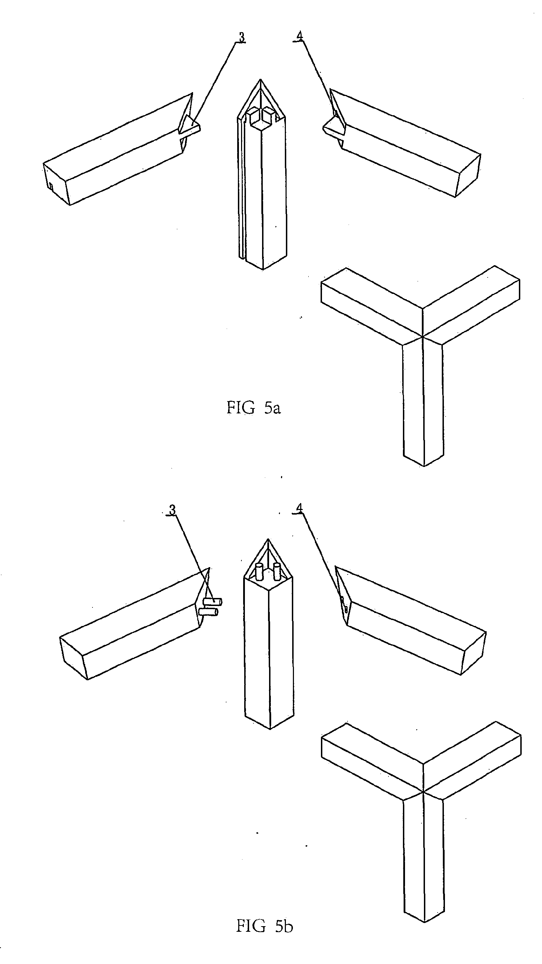

FIGS. 5a, 6a and 7a respectively illustrate a conventional three-dimensional mortise-and-tenon corner connection structure, a conventional two-dimensional mortise-and-tenon corner connection structure, and a conventional mortise-and-tenon, "dove-tail" corner connection, commonly used in the construction of conventional wood furniture.

FIG. 5b illustrates a modification of the conventional three dimensional corners joint which comprises tenons 3 and corresponding mortises 4. The use of engineered bamboo enables simplification of the mortise-and-tenon joint structure, eliminates some of the manual operations involved in making and assembling a conventional three dimensional mortise-and-tenon joint, and is therefore easier to implement, more reliable and precise, and hence, better adapted to large scale automated furniture manufacture.

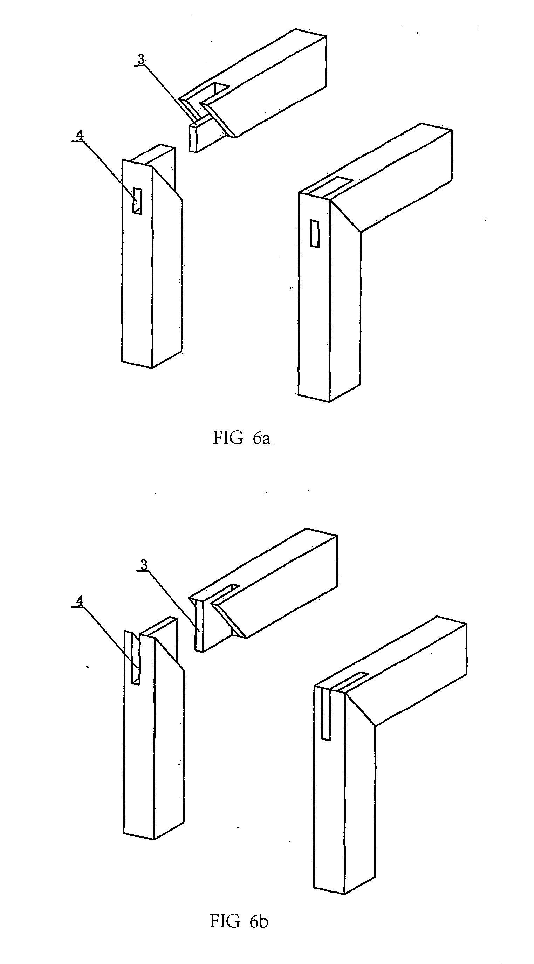

FIGS. 6b illustrate an advantageous modification of the conventional two dimensional wood corners joint. The modified mortise-and-tenon structure is simper and can be formed in one processing step (whereas, the conventional timber mortise-and-tenon joint needs three), results in parts having good interchangeability, and hence, is better adapted to large scale automated furniture manufacture.

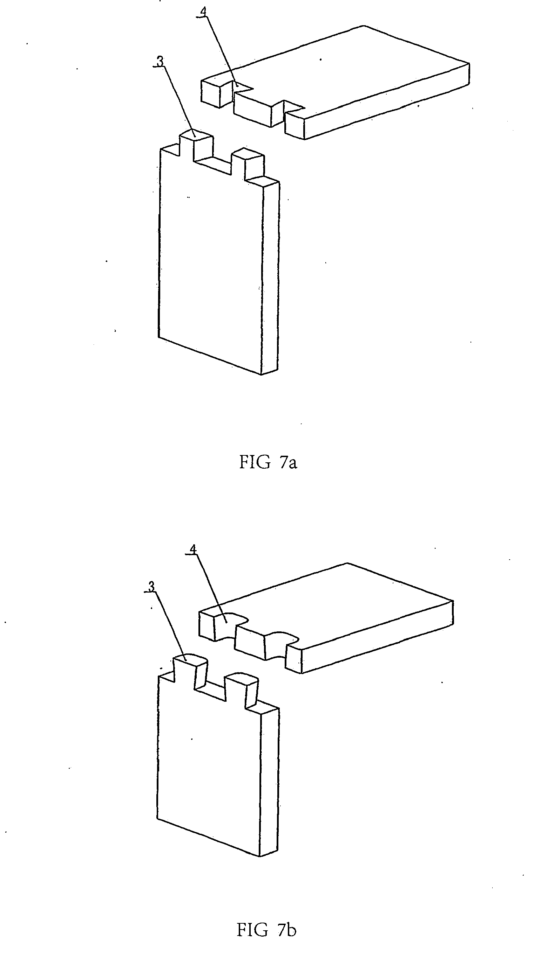

FIG. 7b illustrates a modification of the conventional timber dovetail mortise-and- tenon joint. Because engineered bamboo is harder, stiffer and more brittle, dove tail tenon preferably should not incorporate relatively sharp 90[deg.] angles and corners, and therefore the outer side surfaces of the tenon is preferably processed to incorporate an arcuate form. The modified arc form decreases the compressive stress imposed on the parts during assembly, and can be formed in one processing step with high precision, and hence, is well adapted to large scale automated furniture manufacture.

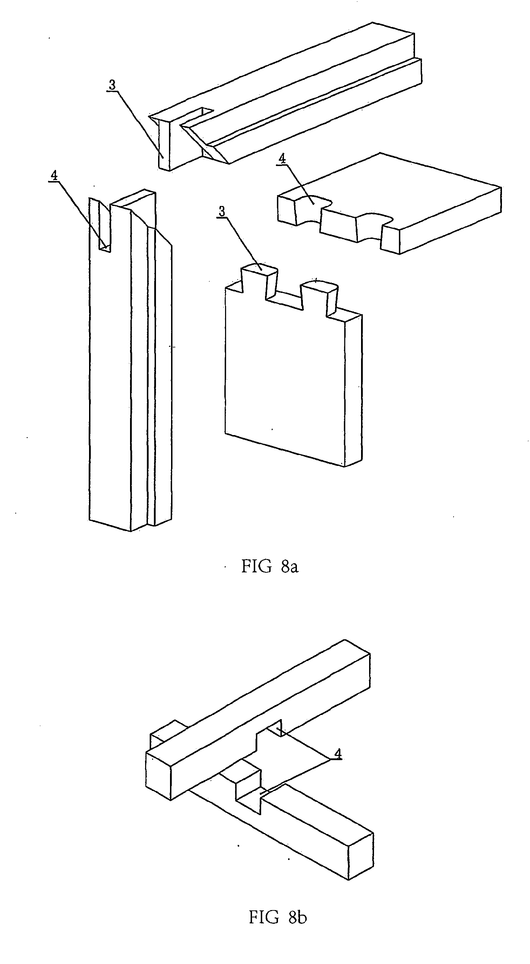

FIG. 8a illustrates two mortise-and-tenon joint structures that are useful with the engineered bamboo furniture of the present invention. These two joints are optimally adapted to take advantage of the engineered bamboo properties of high rigidity and hardness, lower expansion and shrinkage ratios, and small deformation. They make good use of modern glue-bonding techniques and new engineered bamboo plate and frame structures that facilitate and prompt assembly, and thus, simplify construction.

FIG. 8b illustrates a novel cross lap mortise-and-tenon joint. This structure is formed by milling spaced grooves in a plurality of engineered bamboo boards, sawing the boards to the desired lengths, and assembling the boards together as desired. This form of mortise-and-tenon joint acts to prompt the assembly process, and guarantees good precision, and hence, is also well adapted to large scale automated furniture manufacture.

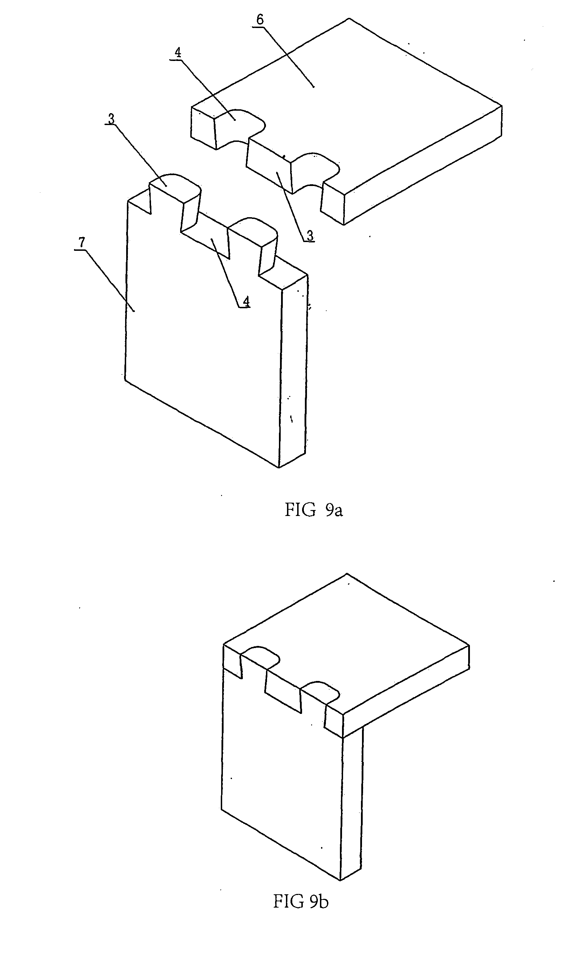

FIGS. 9-14 illustrate various types of mortise-and-tenon joints that are well adapted for the joining of furniture components made of engineered bamboo.

Wherein FIGS. 9A and 9B respectively illustrate an open, or visible, dovetail corner joint 90 for engineered bamboo components. Arcuate trapezium (dovetail) tenons 3 are machined at one end of a first bamboo board 6, and corresponding complementary arcuate trapezium (dovetail) mortises 4 are machined at an end of a second bamboo board 7. The tenons 3 are pressed into the corresponding mortises 4 of the bamboo board 7 that coated with an adhesive. After the adhesive is cured, the two boards are permanently joined together at a right angle through the resulting mortise-and-tenon corner joint.

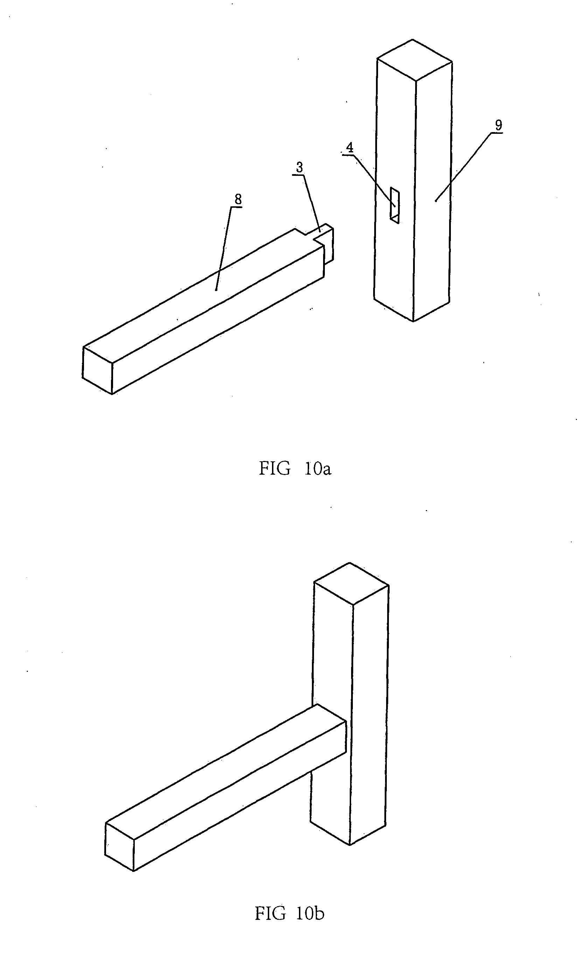

FIGS. 10a and 10b illustrate a "T-type" mortise-and-tenon joint useful with engineered bamboo squares. As shown in the figures, a square tenon 3 is machined at one end of a bamboo square 8, and a complementary square mortise 4 is machined into a second bamboo square 9. The square tenon 3 of bamboo square 8 is coated with an adhesive and then inserted into the complementary mortise 4 of bamboo square 9, by which the two parts are permanently joined.

As it is illustrate in FIGS. 11 a and 11 b, when a flat panel assembly is assembled, tenons 3 formed at opposite ends of elongated frame pieces 10 are inserted into corresponding mortises 4 formed at opposite ends of shortened frame pieces 11 to define a rectangular frame, and the marginal tenon 3 of a rectangular engineered bamboo panel 10 of the type described above are inserted into corresponding mortise grooves 4 formed in the elongated and shortened frame pieces, by which the assembly of the flat panel assembly is complete.

FIG. 12 illustrates a three dimensional (i.e., extending in three directions) mortise-and-tenon corner joint, wherein cylindrical dowel-like tenons 3 are machined at one end of two of the three bamboo square 13, and then inserted into respective corresponding complementary cylindrical mortises 4 formed into other two of the three bamboo squares, by which an invisible mortise-and-tenon corner joint of the three components is effected in three directions.

FIG. 13 illustrates an exemplary process for making a lattice-top table. Parts are first assembled into subassemblies, and the subassemblies are then joined together to form the completed table.

Firstly, leg subassemblies 16 are formed by adhering square tenons 3 and corresponding square mortises 4 on the ends of foot rails 14 and upright leg rails 15.

Secondly, a table top subassembly 20 is formed by joining the lattice panel 19, the elongated frame 17 and shortened frame 18 together by means of tenon 3 and mortise 4.

Lastly, leg subassemblies 16 are joined to the table top subassembly 20 by adhering tenon 3 and the corresponding mortise 4, and by which the table is complete.

FIG. 14 illustrates a process for making a bed frame. Parts are first assembled into subassemblies, and the subassemblies are then assembled into the completed bed frame.

Assembling a headboard subassembly 21 and a footboard subassembly 22, each using mortise-and-tenon joints; providing a pair of side rails 23, each having a pair of metal latch pins 26 mounted on opposite ends thereof; inserting the metal latch pins 26 of the side rails into corresponding apertures of metal hook panels 25 contained in opposite sides of each of the headboard 21 and footboard 22 subassemblies, and then push the side rails 23 downwards so that the metal latch pins engage to the grooves of metal hook panels 25. Finally, dovetail tenons 3 of the mattress support slats 24 are inserted downwards to the corresponding dovetail mortises 4 formed in the side rail 23, to form a complete bed assembly.

## Claims

1. An engineered bamboo furniture with mortise-and-tenon joints , **characterized in that**: said engineered bamboo furniture with mortise-and-tenon joints is manufactured by manufacturing component parts of the furniture out of engineered bamboo viz. bamboo boards and bamboo squares; forming mortises and tenons of various types and shapes on or in the component parts, and bonding the component parts into a finished article of furniture using the mortises and tenons and an adhesive; The finished furniture may comprise a table, a chair, a cabinet, a bed, a book shelf or the like.

2. The engineered bamboo furniture with mortise-and-tenon joints as recited in claim 1, **characterized in that**: the engineered bamboo material is made by laminating bamboo stripes or color bamboo stripes together with an adhesive under a high pressure, prior to their lamination, the bamboo strips are treated by heat-digesting, drying at a high temperature, carbonizing, dehydrating and a starch-extraction process, the color bamboo stripes are further treated by an additional high pressure dyeing process.

3. The engineered bamboo furniture with mortise-and-tenon joints as recited in claim 1 or 2, **characterized in that**: the engineered bamboo formed by using an adhesive under a high pressure comprises face-bonded engineered bamboo, in which bamboo strips are laminated to each other by depositing an adhesive on opposite wide faces of the strips, and pressing them together until the adhesive cures.

4. The engineered bamboo furniture with mortise-and-tenon joints as recited in claim 1 or 2, **characterized in that**: the engineered bamboo formed by using an adhesive under a high pressure comprises edge-bonded engineered bamboo, which is formed by laminating top, middle and bottom three layers of flat-laid bamboo strips with an adhesive under a high pressure;
the edge-bonded engineered bamboo may be in the arrangement that all three layers of bamboo stripes are arranged longitudinally, and the top and the bottom layer are arranged so that the green bamboo of each layer are facing outwards, this arrangement is called edge-bonded engineered bamboo with same vein;
The edge-bonded engineered bamboo may be in the arrangement that the top and the bottom layers of bamboo stripes are arranged longitudinally with there green bamboo facing outwards and the middle layer is arranged perpendicular to the top and bottom layer, this arrangement is called edge-bonded engineered bamboo with different vein.

5. The engineered bamboo furniture with mortise-and-tenon joints as recited in claim 1 or 2, **characterized in that**: the engineered bamboo formed by using an adhesive under a high pressure comprises I-type engineered bamboo, which is formed by laminating flat-laid top and bottom layers, and a stand-laid middle layer sandwiched there between with an adhesive under a high pressure;
the I-type engineered bamboo may be in the arrangement that all three layers of bamboo stripes are arranged longitudinally, this arrangement is called I-type engineered bamboo with same vein;
the I-type engineered bamboo may be in the arrangement that the top and the bottom layers of bamboo stripes are arranged transversely, and the middle layer of bamboo stripe is arranged perpendicularly with respect to the top and bottom layers of bamboo stripes, this arrangement is called I-type engineered bamboo with different vein.

6. The engineered bamboo furniture with mortise-and-tenon joints as recited in claim 1 or 2, **characterized in that**: the engineered bamboo formed by using an adhesive under a high pressure comprises multi-I engineered bamboo, which is formed by laminating layers of I-type engineered bamboo together;
the multi-I engineered bamboo may be in the arrangement that all bamboo stripe layers are arranged longitudinally, this arrangement is called multi-I engineered bamboo with same vein;
the multi-I engineered bamboo may be in the arrangement that adjacent bamboo stripe layers are arranged perpendicularly with respect to each other, this arrangement is called multi-I engineered bamboo with different vein.

7. The engineered bamboo furniture with mortise-and-tenon joints as recited in claim 1, **characterized in that**: said tenons and complementary mortises used to join the furniture components can be square, trapezoidal.

8. The engineered bamboo furniture with mortise-and-tenon joints as recited in claim 1, **characterized in that**: said tenons and complementary mortises used to join the furniture components can be circular, elliptical.

9. The engineered bamboo furniture with mortise-and-tenon joints as recited in claim 1, **characterized in that**: said tenons and complementary mortises used to join the furniture components can be arcuate trapezoids..

10. The engineered bamboo furniture with mortise-and-tenon joints as recited in claim 1, **characterized in that**: Said tenons and complementary mortises used to join the furniture components including exposed joints and secret joints, said exposed and secret joints can be lap butt joints, embracing-shoulder joints, off-set finger scarf joint, corner joint inserted shoulder joints, 3D- inserted shoulder joints, secret double shoulder lock miter joints, and so on.
